# EUROPEAN PATENT APPLICATION

(11) **EP 4 572 317 A1**
(43) Date of publication of application: **18.06.2025**
(21) Application number: 24786336.8
(22) Date of filing: 08.10.2024
(51) Int. Cl.: H04N 23/63, H04N 23/80, H04N 23/62, H04N 5/77, H04N 23/60, H04N 5/265

(54) **ELECTRONIC DEVICE AND VIDEO CAPTURING METHOD**

(30) Priority: 10.10.2023 KR 20230134234; 15.11.2023 KR 20230158540
(71) Applicant: Samsung Electronics Co., Ltd, Suwon-si, Gyeonggi-do 16677 (KR)
(72) Inventor: OH, Deukkyu, Suwon-si, Gyeonggi-do 16677 (KR); KIM, Seonghun, Suwon-si, Gyeonggi-do 16677 (KR); SO, Hyeonbin, Suwon-si, Gyeonggi-do 16677 (KR); OH, Jaemin, Suwon-si, Gyeonggi-do 16677 (KR); WOO, Kwangtaek, Suwon-si, Gyeonggi-do 16677 (KR); AN, Jinwan, Suwon-si, Gyeonggi-do 16677 (KR)
(74) Representative: Nederlandsch Octrooibureau
(86) International application number: PCT/KR2024/015290
(87) International publication number: WO 2025/079967

(57) **Abstract**

An electronic device according to an embodiment may include a camera, a display, a memory configured to store instructions, and a processor, wherein the instructions, when executed by the processor, cause the electronic device to display a video selected according to a user input on the display, display a user interface for continue video recording on at least a portion of a video play application, identify, based on an execution request for the continue video recording, recording information having been applied to a video being displayed, and perform a function for recording a sub-video based on the recording information, correct the sub-video and the selected video, connect an end point of the selected video and a start point of the sub-video to generate a video, and store the generated video in the memory.

## Description

### [Technical Field]

The disclosure relates to an electronic device and a method for recording a video.

### [Background Art]

Various electronic devices, such as a smart-phone, a tablet PC, a portable multimedia player (PMP), a personal digital assistant (PDA), a laptop personal computer (PC), and a wearable device, such as a wristwatch, a head-mounted display (HMD), include a camera and may record a video by using the camera.

### [Disclosure of Invention]

An aspect of an electronic device and a method for recording a video according to an embodiment of the disclosure is to acquire recording information from a pre-stored video and add, based on the acquired recording information, a recorded new video to the stored video so as to secure continuity of a video.

An electronic device according to an embodiment of the disclosure may include a camera, a display, a memory configured to store instructions, and a processor, wherein the instructions, when executed by the processor, cause the electronic device to display a video selected according to a user input on the display, display a user interface for continue video recording on at least a portion of a video play application, identify, based on an execution request for the continue video recording, recording information having been applied to a video being displayed, and perform a function for recording a sub-video based on the recording information, correct the sub-video and the selected video, connect an end point of the selected video and a start point of the sub-video to generate a video, and store the generated video in the memory.

A method for recording a video according to an embodiment of the disclosure may include an operation of displaying a video selected according to a user input on a display, an operation of displaying a user interface for continue video recording on at least a portion of a video play application, an operation of identifying, based on an execution request for the continue video recording, recording information having been applied to a video being displayed, and an operation of performing a function for recording a sub-video based on the recording information, correcting the sub-video and the selected video, connecting an end point of the selected video and a start point of the sub-video to generate a video, and storing the generated video in the memory.

### [Brief Description of Drawings]

With regard to the description of the drawings, the same or like reference signs may be used to designate the same or like elements.
FIG. 1 is a block diagram illustrating an electronic device in a network environment according to an embodiment of the disclosure.
FIG. 2 is a flowchart illustrating a video recording method of an electronic device according to an embodiment of the disclosure.
FIG. 3 is a flowchart illustrating a video recording method of an electronic device according to an embodiment of the disclosure.
FIG. 4 is a flowchart illustrating an operation of recording and storing a video following a stored video based on recording information according to an embodiment of the disclosure.
FIG. 5 is a block diagram illustrating an electronic device for video recording according to an embodiment of the disclosure.
FIG. 6 is a diagram illustrating a user interface for continue video recording in a video play application execution screen 600 according to an embodiment of the disclosure.
FIG. 7 is a diagram illustrating a user interface for continue video recording in a preview screen according to an embodiment of the disclosure.
FIG. 8 is a diagram illustrating an operation of acquiring recording information of a stored video according to an embodiment of the disclosure.
FIG. 9 is a diagram illustrating an operation of acquiring recording information of a stored video according to an embodiment of the disclosure.
FIG. 10 is a diagram illustrating an operation of combining a main video and a sub-video in an electronic device according to an embodiment of the disclosure.
FIG. 11 is a diagram illustrating an operation of combining a main video and a sub-video according to an embodiment of the disclosure.
FIG. 12 is a diagram illustrating additional video recording according to an embodiment of the disclosure.
FIG. 13 is a diagram illustrating additional video recording according to an embodiment of the disclosure.
FIG. 14 is a diagram illustrating additional video recording according to an embodiment of the disclosure.

### [Mode for the Invention]

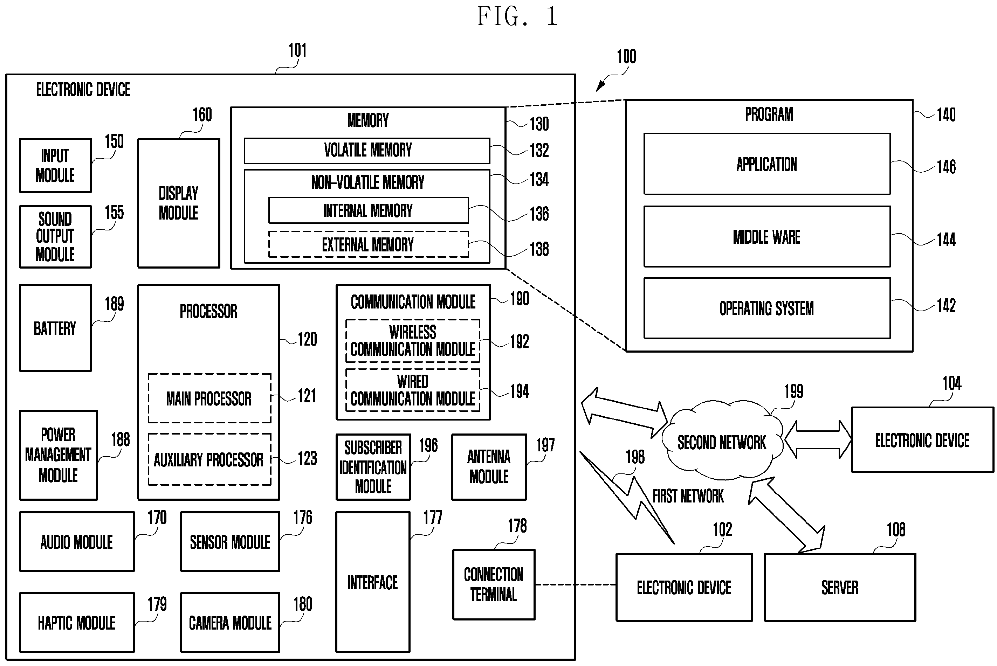

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

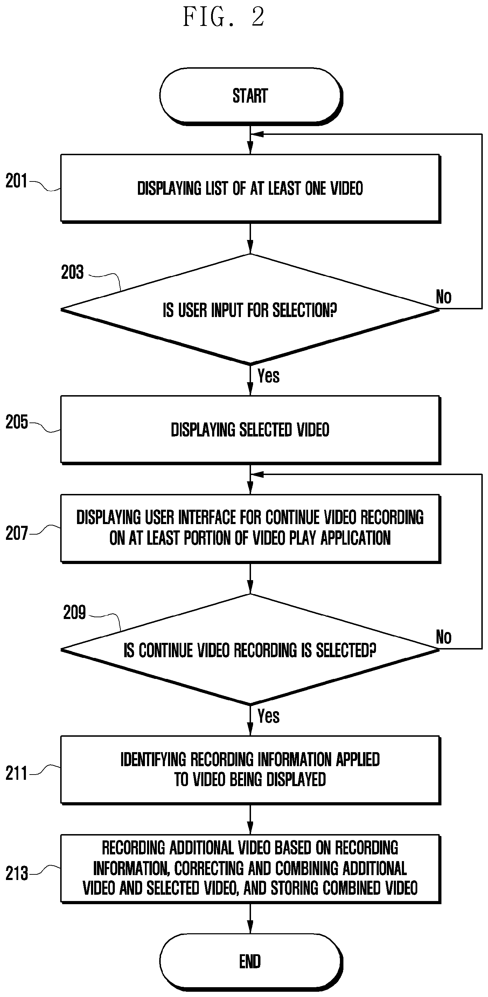

FIG. 2 is a flowchart illustrating a video recording method of an electronic device 101 according to an embodiment of the disclosure.

In an embodiment, under control of the processor 120, in operation 201, the electronic device 101 may display a list of at least one video on the display 160. The electronic device 101 may store at least one video or video file in the memory 130. The electronic device 101 may display a list of at least one video or video file on the display 160. The electronic device 101 may include an application (e.g., a gallery application, an album application, and a video application) capable of displaying or reproducing a video and/or a photograph. In case that the application capable of displaying or reproducing a video and/or a photograph is executed, the electronic device 101 may display a list of at least one video or video file on the display 160. The list of at least one video or video file may include a thumbnail image. The thumbnail image may correspond to an image associated with a predetermined frame of a video. In case that the application capable of displaying or reproducing a video and/or a photograph is executed, the electronic device 101 may display a thumbnail for at least one video or video file on the display 160.

In an embodiment, the memory 130 may include instructions, when executed by the processor 120, causing the electronic device 101 to display a list of at least one video on the display 160.

In an embodiment, operation 201 may be omitted.

In an embodiment, under control of the processor 120, in operation 203, the electronic device 101 may determine whether there is a user input for selection. The user input for selection may correspond to a user input for selecting one of videos included in the list.

In an embodiment, the memory 130 may include instructions, when executed by the processor 120, causing the electronic device 101 to determine whether there is a user input for selection.

In an embodiment, under control of the processor 120, in operation 203, the electronic device 101 may determine whether there is a user input for selecting one of videos included in the list.

In case that there is a user input for selection, the electronic device 101 may proceed from operation 203 to operation 205.

In case that there is no user input for selection, the electronic device 101 may proceed from operation 203 to operation 201.

In an embodiment, operation 203 may be omitted.

In an embodiment, under control of the processor 120, in operation 205, the electronic device 101 may display the selected video. The operation of displaying the selected video may include an operation of reproducing the selected video.

In an embodiment, the memory 130 may include instructions, when executed by the processor 120, causing the electronic device 101 to display the selected video.

In an embodiment, under control of the processor 120, in operation 207, the electronic device 101 may display a user interface for continue video recording on at least a portion of the video play application.

In an embodiment, the memory 130 may include instructions, when executed by the processor 120, causing the electronic device 101 to display a user interface for continue video recording on at least a portion of the video play application.

In an embodiment, under control of the processor 120, in operation 207, the electronic device 101 may not display the user interface for continue video recording on at least a portion of the video play application and may determine that the continue video recording is selected when receiving a user input (e.g., a long-press input) for at least a portion of the video being displayed.

In an embodiment, under control of the processor 120, in operation 207, the electronic device 101 may display a user interface for continue video recording on at least a portion of the video being displayed. At least a partial frame of the video may be played in the video being displayed. The user interface for continue video recording may be displayed while the video is displayed (or played) for a designated time. However, without limitation thereto, when the video is being displayed (or played), the user interface for the continue video recording may be displayed.

In an embodiment, under control of the processor 120, in operation 209, the electronic device 101 may determine whether an operation of continue video recording is selected.

In an embodiment, the memory 130 may include instructions, when executed by the processor 120, causing the electronic device 101 to determine whether the operation of continue video recording is selected.

In an embodiment, under control of the processor 120, in operation 209, the electronic device 101 may not display the user interface for continue video recording on at least a portion of the video play application and may determine that the continue video recording is selected when receiving a user input (e.g., a long-press input) for at least a portion of the video being displayed.

In case that the operation of continue video recording is selected, the electronic device 101 may proceed from operation 209 to operation 211.

In case that the operation of continue video recording is not selected, the electronic device 101 may proceed from operation 209 to operation 207.

In an embodiment, when the continue video recording is executed, the electronic device 101 may control the camera 180 and record an additional video or sub-video. The electronic device 101 may combine a certain frame of the video being displayed or an additional video or sub-video having been recorded during a certain time. The electronic device 101 may combine of the video being displayed or an additional video or sub-video having been recorded from a certain frame or a certain time. The continue video recording may correspond to an operation of combining an additionally recorded and acquired video or sub-video with a video being displayed.

In an embodiment, under control of the processor 120, in operation 211, the electronic device 101 may identify recording information having been applied to the video being displayed. The recording information may include at least one of a camera configuration value applied when the video being displayed has been recorded, an effect applied to the video being displayed, or information on an application applied or used when the video being displayed has been recorded. The electronic device 101 may acquire a folder in which a video file is stored, a storage path for a video file, or information on an application applied or used when a video being displayed has been recorded based on a name of the video. Alternatively, the electronic device 101 may acquire information on an application applied or used when a video being displayed has been recorded based on a name of the video, based on tag information added from the application having been used for recording the video.

In an embodiment, the memory 130 may include instructions, when executed by the processor 120, causing the electronic device 101 to identify recording information applied to the video being displayed.

In an embodiment, when application information is acquired, under control of the processor 120, the electronic device 101 may execute an application corresponding to the application information. For example, a gallery application or camera application which is currently executed may execute a package or class of an application corresponding to the application information, based on an internal message (e.g., intent or broadcast). When the package or class is executed, under control of the processor 120, the electronic device 101 may transfer meta information (or recording information) stored in the video being displayed to the camera application (or the video recording application) through an internal message (e.g., argument). The camera application (or the video recording application) may identify, based on the meta information, under control of the processor 120, a history, or configuration information or environment (e.g., a location, time, illuminance, a composition, or a content) information of a camera used when the video being displayed has been recorded. The electronic device 101 may, under control of the processor 120, encode meta information and/or tag information and match same with the video file in a random number format to be stored in the memory 130.

In an embodiment, under control of the processor 120, in operation 213, the electronic device 101 may record an additional video based on the recording information, correct and combine the additional video and a selected video (or stored video), and store the combined video.

In an embodiment, the memory 130 may include instructions, when executed by the processor 120, causing the electronic device 101 to record an additional video based on the recording information of the video being displayed, correct and combine the additional video and a selected video (or stored video), and store the combined video.

In an embodiment, under control of the processor 120, in operation 213, the electronic device 101 may record and store a video following the video being displayed, based on the recording information. The electronic device 101 may control the camera 180 and record an additional video or sub-video. The electronic device 101 may combine of the video being displayed or an additional video or sub-video having been recorded at a certain time. The certain frame or certain time of the video being displayed may be designated by a user. However, without limitation thereto, the electronic device 101 may, under control of the processor 120, select the certain frame or certain time of the video being displayed based on the environment information (e.g., a location, time, illuminance, a composition, or a content) when the video has been recorded. In this way, inconvenience of having stopped and resumed recording may be eliminated and continuous recording may be possible.

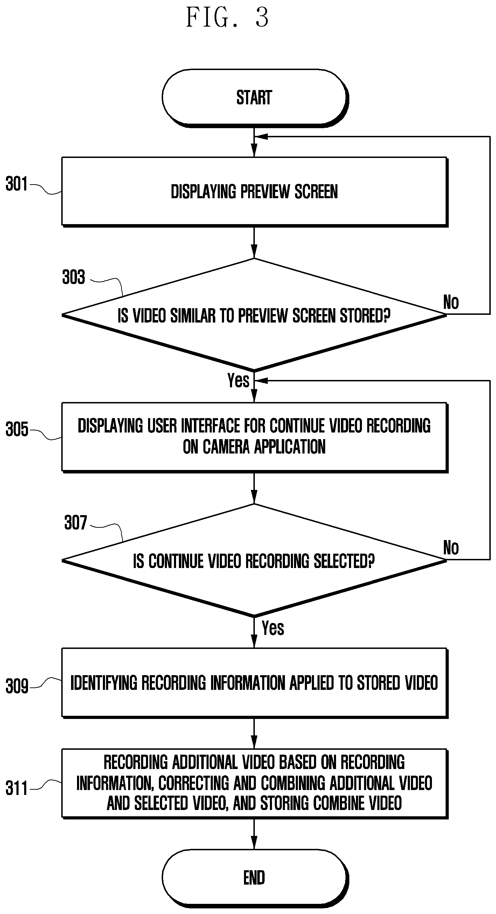

FIG. 3 is a flowchart illustrating a video recording method of an electronic device 101 according to an embodiment of the disclosure.

In an embodiment, under control of the processor 120, in operation 301, the electronic device 101 may display, when the camera 180 or the camera application is executed, an image acquired from the camera 180 on the display 160 as a preview screen.

In an embodiment, the memory 130 may include instructions, when executed by the processor 120, causing the electronic device 101 to display, when the camera 180 or the camera application is executed, an image acquired from the camera 180 on the display 160 as a preview screen.

In an embodiment, the video recording of the electronic device 101 may include not only video recording but also video recording and/or video logging.

In an embodiment, under control of the processor 120, in operation 303, the electronic device 101 may determine whether a video similar to the preview screen is prestored in the memory 130.

In an embodiment, the memory 130 may include instructions, when executed by the processor 120, causing the electronic device 101 to determine whether a video similar to the preview screen is prestored in the memory 130.

In an embodiment, under control of the processor 120, the electronic device 101 may identify a content of the video stored in the memory 130. The electronic device 101 may, under control of the processor 120, store the identified content in the memory 130 in advance.

In an embodiment, the electronic device 101 may identify, from the video stored in the memory 130, at least one of information on an object included in the video, position information, information on a composition, semantic information for the object included in the video, camera configuration information when the video has recorded, or time information. The electronic device 101 may, under control of the processor 120, store at least one of information on an object included in the video, position information, information on a composition, semantic information for the object included in the video, camera configuration information when the video has recorded, or time information in the memory 130. The content of the video may include at least one of information on an object included in the video, position information, information on a composition, semantic information for the object included in the video, camera configuration information when the video has recorded, or time information.

In an embodiment, under control of the processor 120, in operation 303, the electronic device 101 may determine whether the preview screen is similar to the stored video, based on the identified content. In case that similarity between the identified content and the preview screen is equal to or greater than a predetermined rate, the electronic device may determine that the preview screen is similar to the stored video.

In case that the preview screen is similar to the stored video, the electronic device 101 may proceed from operation 303 to operation 305.

In case that the preview screen is not similar to the stored video, the electronic device 101 may proceed from operation 303 to operation 301.

In an embodiment, under control of the processor 120, in operation 305, the electronic device 101 may display a user input for continue video recording on at least a portion of the camera application.

In an embodiment, the memory 130 may include instructions, when executed by the processor 120, causing the electronic device 101 to display a user interface for continue video recording on at least a portion of the camera application.

In an embodiment, under control of the processor 120, in operation 305, the electronic device 101 may not display the user interface for continue video recording on at least a portion of the video play application and may determine that the continue video recording is selected when receiving a user input (e.g., a long-press input) for at least a portion of the video being displayed.

In an embodiment, under control of the processor 120, in operation 305, the electronic device 101 may display a user input for continue video recording on at least a portion of the preview screen. The user interface for continue video recording may be displayed while the preview screen is displayed (or played) for a designated time. However, without limitation thereto, when the preview screen is being displayed (or played), the user interface for the continue video recording may be displayed.

In an embodiment, under control of the processor 120, in operation 307, the electronic device 101 may determine whether an operation of continue video recording is selected.

In an embodiment, the memory 130 may include instructions, when executed by the processor 120, causing the electronic device 101 to determine whether the operation of continue video recording is selected.

In an embodiment, under control of the processor 120, in operation 307, the electronic device 101 may not display the user interface for continue video recording on at least a portion of the video play application and may determine that the continue video recording is selected when receiving a user input (e.g., a long-press input) for at least a portion of the video being displayed.

In case that the operation of continue video recording is selected, the electronic device 101 may proceed from operation 307 to operation 309.

In case that the operation of continue video recording is not selected, the electronic device 101 may proceed from operation 307 to operation 305.

In an embodiment, under control of the processor 120, in operation 309, the electronic device 101 may identify recording information having been applied to the stored video.

In an embodiment, the memory 130 may include instructions, when executed by the processor 120, causing the electronic device 101 to identify recording information applied to the stored video.

In an embodiment, under control of the processor 120, in operation 309, the electronic device 101 may identify recording information based on tag information and/or information on a storing path of a file of the selected video (or stored video).

In an embodiment, under control of the processor 120, in operation 311, the electronic device 101 may record and store a video following the stored video in the memory 130, based on the recording information. The electronic device 101 may control the camera 180 and record an additional video or sub-video. The electronic device 101 may combine of the stored video or an additional video or sub-video having been recorded at a certain frame or a certain time.

In an embodiment, the memory 130 may include instructions, when executed by the processor 120, causing the electronic device 101 to record and store a video following the stored video in the memory 130, based on the recording information.

In an embodiment, under control of the processor 120, in operation 311, the electronic device 101 may perform a function for recording a sub-video to the stored video, based on the recording information, correct the sub-video and the selected video, connect an end point of the selected video and a start point of the sub-video to generate a video, and store the generated video in the memory 130. In this way, inconvenience of having stopped and resumed recording may be eliminated and continuous recording may be possible.

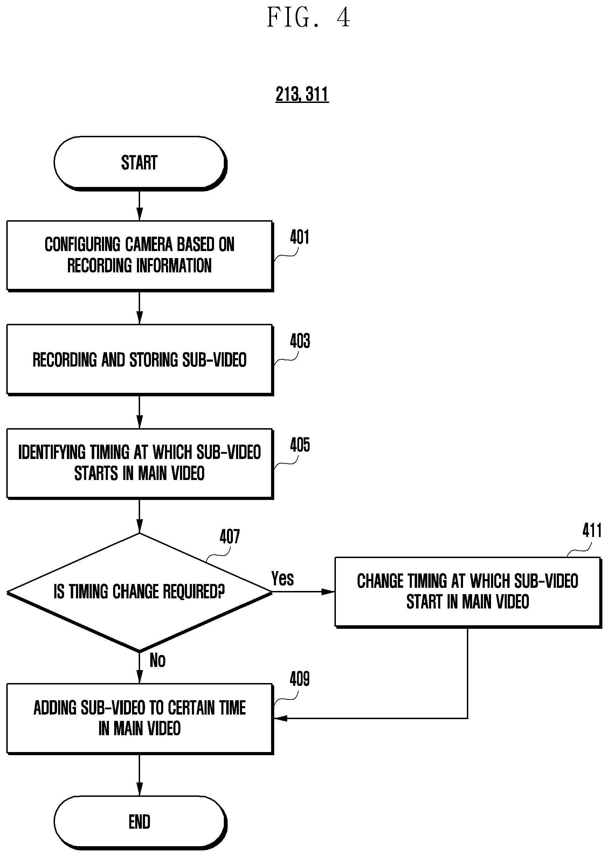

FIG. 4 is a flowchart illustrating an operation 213 or 311 of recording and storing a video following a stored video based on recording information according to an embodiment of the disclosure.

In an embodiment, under control of the processor 120, in operation 401, the electronic device 101 may configure the camera 180, based on the recording information. The electronic device 101 may configure the camera 180 based on camera configuration information included in the recording information.

In an embodiment, the memory 130 may include instructions, when executed by the processor 120, causing the electronic device 101 to configure the camera 180, based on the recording information.

In an embodiment, under control of the processor 120, in operation 403, the electronic device 101 may record a sub-video (or additional video) by using the camera 180 configured based on the recording information based on the recording information, and store same in the memory 130.

In an embodiment, the memory 130 may include instructions, when executed by the processor 120, causing the electronic device 101 to record a sub-video (or additional video) by using the camera 180 configured based on the recording information based on the recording information, and store same in the memory 130.

In an embodiment, under control of the processor 120, in operation 405, the electronic device 101 may identify a timing at which the sub-video (or additional video) starts in the main video (e.g., the video being displayed in FIG. 2 or the stored video in FIG. 3). The timing may include a time at which the sub-video (or additional video) starts from a certain frame or certain time of the main video (e.g., the video being displayed in FIG. 2 or the stored video in FIG. 3). The timing may be designated by the user.

In an embodiment, the memory 130 may include instructions, when executed by the processor 120, causing the electronic device 101 to identify the timing at which the sub-video (or additional video) starts in the main video (e.g., the video being displayed in FIG. 2 or the stored video in FIG. 3).

In an embodiment, the electronic device 101 may identify, from the main video (e.g., the video being displayed in FIG. 2 or the stored video in FIG. 3), at least one of information on an object included in the video, position information, information on a composition, semantic information for the object included in the video, camera configuration information when the video has recorded, or time information. The timing may be selected, under control of the processor 120, at a point at which the similarity between the content of the video and the sub-video is equal to or greater than a certain rate.

In an embodiment, under control of the processor 120, in operation 407, the electronic device 101 may determine whether a change of the timing is required.

In an embodiment, the memory 130 may include instructions, when executed by the processor 120, causing the electronic device 101 to determine whether a change of the timing is required.

In case that a change of the timing is not required, the electronic device 101 may proceed from operation 407 to operation 409.

In case that a change of the timing is required, the electronic device 101 may proceed from operation 407 to operation 411.

In an embodiment, under control of the processor 120, in operation 409, the electronic device 101 may add the sub-video (or additional video) to a certain time in the main video (e.g., the video being displayed in FIG. 2 or the stored video in FIG. 3).

In an embodiment, the memory 130 may include instructions, when executed by the processor 120, causing the electronic 101 to add the sub-video (or additional video) to a certain time in the main video (e.g., the video being displayed in FIG. 2 or the stored video in FIG. 3).

In an embodiment, under control of the processor 120, in operation 411, the electronic device 101 may change a timing at which the sub-video (or additional video) starts in the main video (e.g., the video being displayed in FIG. 2 or the stored video in FIG. 3) and proceed to operation 409.

In an embodiment, the memory 130 may include instructions, when executed by the processor 120, causing the electronic device 101 to change the timing at which the sub-video (or additional video) starts in the main video (e.g., the video being displayed in FIG. 2 or the stored video in FIG. 3). In this way, inconvenience of having stopped and resumed recording may be eliminated and continuous recording may be possible.

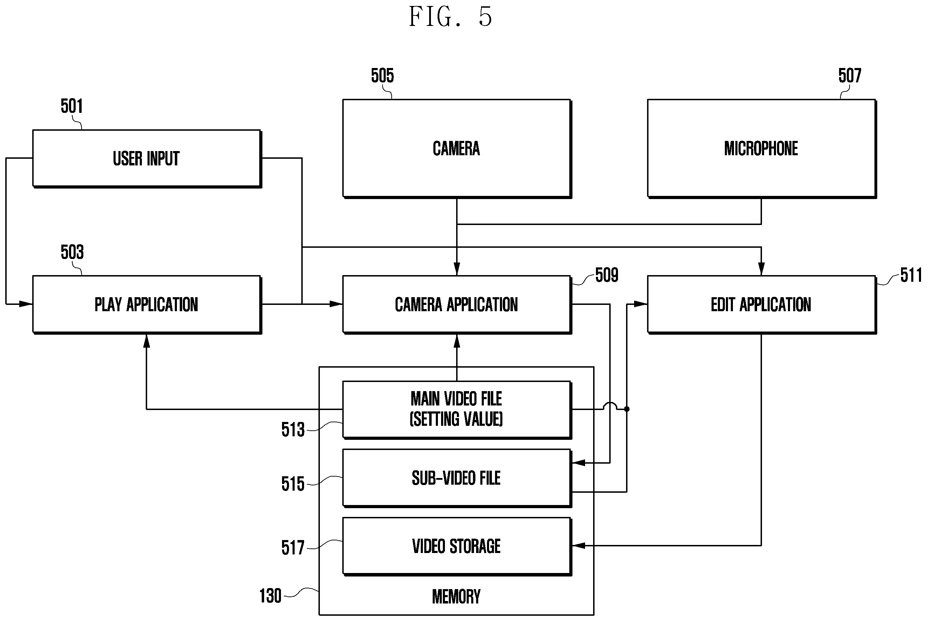

FIG. 5 is a block diagram illustrating an electronic device 101 for video recording according to an embodiment of the disclosure.

In an embodiment, the electronic device 101 may include a camera 505, a microphone 507, a memory 130, a play application 503, a camera application 509, and an edit application 511. The play application 503, the camera application 509, and the edit application 511 may be stored in the memory 130 and executed under control of the processor 120.

In an embodiment, the memory 130 may store a main video (e.g., the video being displayed in FIG. 2 or the stored video in FIG. 3) file 513, a sub-video (or additional video) file 515, and a combined video 517 in which the main video file 513 and the sub-video file 515 are combined.

In an embodiment, under control of the processor 120, the electronic device 101 may execute or control an operation of the play application 503, the camera application 509, and the edit application 511, based on a user input 501.

In an embodiment, the play application 503 may correspond to, for example, an application for video play and/or display. The play application 503 may include at least one of an album application or a gallery application.

In an embodiment, the camera application 509 may correspond to, for example, an application configured to control the camera 505 and/or the microphone 507 to record a still image and/or video. The camera application 509 may control the camera 505 and/or the microphone 507 to acquire an image, a video, and a sound.

In an embodiment, the edit application 511 may correspond to an application configured to edit the still image and/or video.

In an embodiment, in case that a continue video recording operation is selected by the user input 501 from the main video 513 being displayed on the play application 503, the electronic device 101 may, under control of the processor 120, transfer recording information from the main video file 513 to the camera application 509. The camera application 509 may change or control a configuration value of the camera 505 and/or the microphone 507, based on the recording information.

**In** an embodiment, the electronic device 101 may, under control of the processor 120, record store the sub-video file 515 acquired by the camera 505 and/or the microphone 507 configured based on the recording information in the memory 130.

**In** an embodiment, the electronic device 101 may, under control of the processor 120, use the edit application 511 and combine the main video file 513 and the sub-video file 515. The combined video 517 may be stored in the memory 130.

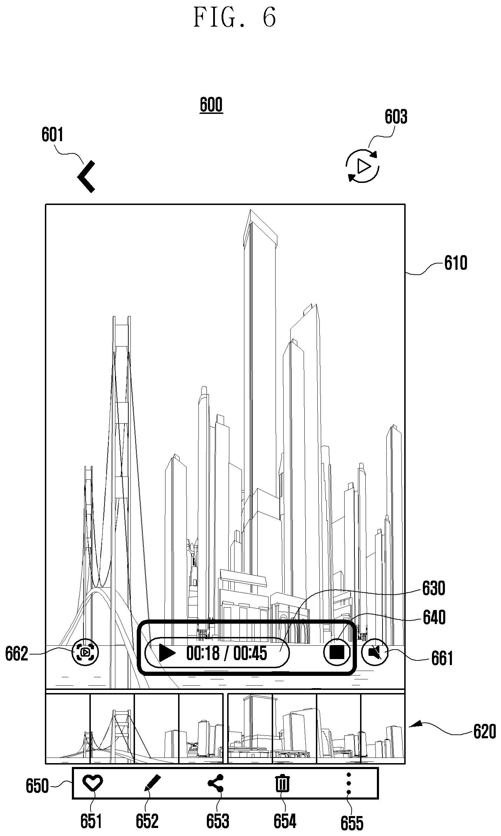

FIG. 6 is a diagram illustrating a user interface 640 for continue video recording in a video play application execution screen 600 according to an embodiment of the disclosure.

In an embodiment, the video play application (e.g., the album application, or the gallery application) may display a list of stored videos. A video selected according to the user input among the stored videos may be displayed on the display 160. The selected video may include a video being displayed on the display 160 or a video stored in the memory 130.

In an embodiment, the video play application execution screen 600 may include at least one of a video play screen 610, a preview screen 620, play time information 630, a user interface 640 for continue video recording, or a user interface 650 for video editing.

In an embodiment, the video play application execution screen 600 may further include a user interface regarding go back 601, play 603, mute 661, and video capture 662. In case when a user input for the user interface regarding the video capture 662 is received, the electronic device 101 may capture an image frame currently being displayed or played.

In an embodiment, the user interface 650 regarding video editing may include a user input for likes 651, text input 652, sharing 653, deletion 654, or other functions 655. In case that a user input for the text input 652 is received, the electronic device 101 may perform functions capable of editing a video, such as effect and brightness adjustment as well as text inputting.

In an embodiment, the video play application execution screen 600 may display the user interface 640 for continue video recording on the video play screen 610. The user interface 640 for continue video recording may be displayed while the video is being displayed (or played) for a designated time period. However, without limitation thereto, when the video is being displayed (or played), the user interface 640 for the continue video recording may be displayed. In this way, inconvenience of having stopped and resumed recording may be eliminated and continuous recording may be possible.

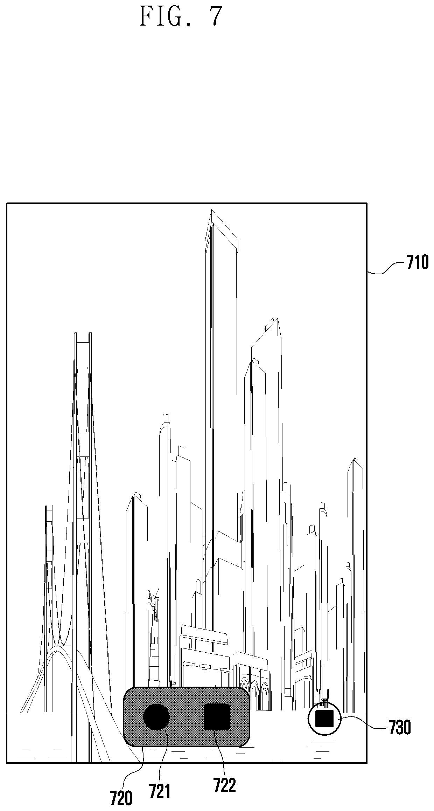

FIG. 7 is a diagram illustrating a user interface 730 for continue video recording in a preview screen 710 according to an embodiment of the disclosure.

In an embodiment, when the camera application is executed, the electronic device 101 may display an image acquired through the camera 180 as the preview screen 710.

In an embodiment, the preview screen 710 may display a recording control interface 720 and the user interface 730 for continue video recording. The recording control interface 720 may include an interface 721 for recording start/pause and an interface 722 for stop recording. The user interface 730 for continue video recording may be displayed while the video is being displayed (or played) for a designated time. However, without limitation thereto, when the video is being displayed (or played), the user interface 730 for the continue video recording may be displayed.

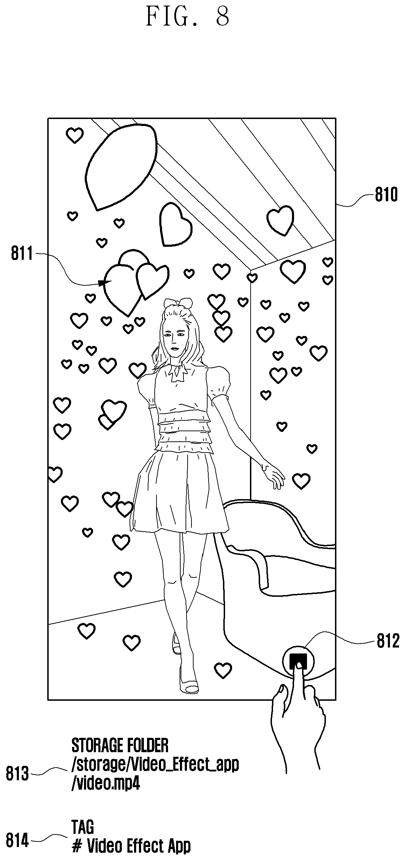

FIG. 8 is a diagram illustrating an operation of acquiring recording information of a stored video according to an embodiment of the disclosure.

In an embodiment, a video 810 stored in the memory 130 may include a special effect 811. For example, the special effect 811 may include an effect for dynamically moving a heart image on a video.

In an embodiment, in case that the continue video recording 812 is selected through a user input, the electronic device 101 may continue to record the special effect 811 having been used in the prestored video (e.g., the video 810). In an embodiment, in case that the continue video recording 812 is selected by the user from the stored video 810, the electronic device 101 may, under control of the processor 120, identify recording information 813 or 814 included in the video 810. Under control of the processor 120, the electronic device 101 may configure the camera 180 based on the recording information 813 or 814 or identify application information corresponding to an application to which the special effect 811 has been applied. Under control of the processor 120, the electronic device 101 may record a sub-video based on the application information and/or a configuration of the camera 180, and combine the recorded sub-video to the main video. The recording information 813 or 814 may include video file storage path-related information 813 and/or tag information 814.

In an embodiment, when application information is acquired, under control of the processor 120, the electronic device 101 may execute an application corresponding to the application information. The electronic device 101 may, under control of the processor 120, identify application information based on the video file storage path-related information 813 and/or the tag information 814.

Referring to FIG. 8, the video file storage path-related information 813 may include information such as "/storage/video_effect_app/video.mp4". Here, "video.mp4" indicates a name of the video file, and "storage" and "video_effect_app" each indicate a folder in which the video is stored. In the name of the folder, "video effect_app" may indicate a folder configured to store videos recorded using an application named "video effect". The electronic device 101 may identify an application used for recording a corresponding video through the video file storage path-related information 813 or the folder name.

Referring to FIG. 8, the tag information 814 may include information such as "#VIDEO EFFECT APP". Here, "#VIDEO EFFECT APP" may correspond to tag information attached to videos recorded using an application named "video effect". The electronic device 101 may identify an application used for recording a corresponding video through the tag information 814.

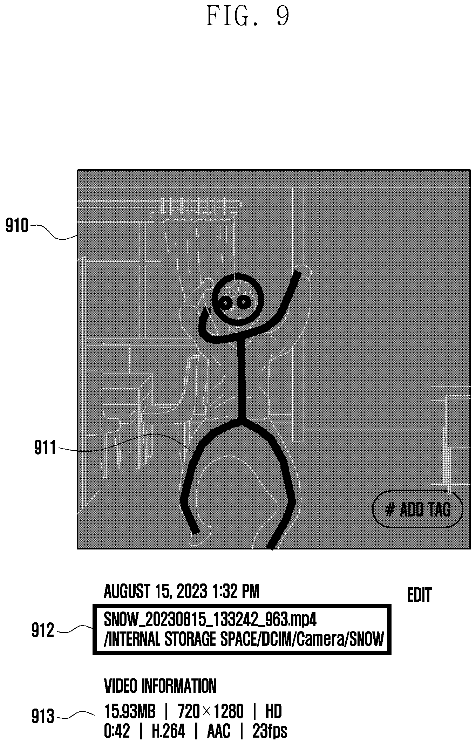

FIG. 9 is a diagram illustrating an operation of acquiring recording information of a stored video according to an embodiment of the disclosure.

In an embodiment, a video 910 stored in the memory 130 may include a special effect 911. For example, the special effect 911 may include an effect for displaying human joints as a line in a video.

In an embodiment, in case that the continue video recording 812 is selected through a user input, the electronic device 101 may continue to record using the recording information 912 or 913 acquired from a prestored video (e.g., the video 910).

In an embodiment, in case that the continue video recording 812 is selected by the user from the stored video 910, the electronic device 101 may, under control of the processor 120, identify recording information 912 or 913 included in the video 910. Under control of the processor 120, the electronic device 101 may configure the camera 180 based on the recording information 912 or 913 or identify application information corresponding to an application to which the special effect 911 has been applied. Under control of the processor 120, the electronic device 101 may record a sub-video based on the application information and/or a configuration of the camera 180, and combine the recorded sub-video to the main video. The recording information 912 or 913 may include video file storage path-related information 912 and/or camera configuration information 913.

In an embodiment, when application information is acquired, under control of the processor 120, the electronic device 101 may execute an application corresponding to the application information. The electronic device 101 may, under control of the processor 120, identify application information and/or camera configuration information based on the video file storage path-related information 912 and/or the camera configuration information 913.

Referring to FIG. 9, the video file storage path-related information 912 may include information such as "SNOW_20230815_133242_963_mp4/internal storage space/DCIM/Camera/SNOW". Here, "SNOW_20230815_133242_963_mp4" indicates a name of the video file, and "internal storage space, DCIM, Camera, and SNOW each indicate a folder stored. In the name of the folder, "SNOW" may indicate a folder configured to store videos recorded using an application named "SNOW". The electronic device 101 may identify an application used for recording a corresponding video through the video file storage path-related information 912 or the folder name.

Referring to FIG. 9, the camera configuration information 913 may include information such as 15.93 MB, 720*1280, HD, 0:42, H.264, AAC, and 23fps. The camera configuration information 913 may include information, such as codec, a frame, an aspect ratio, and resolution when a video is recorded.

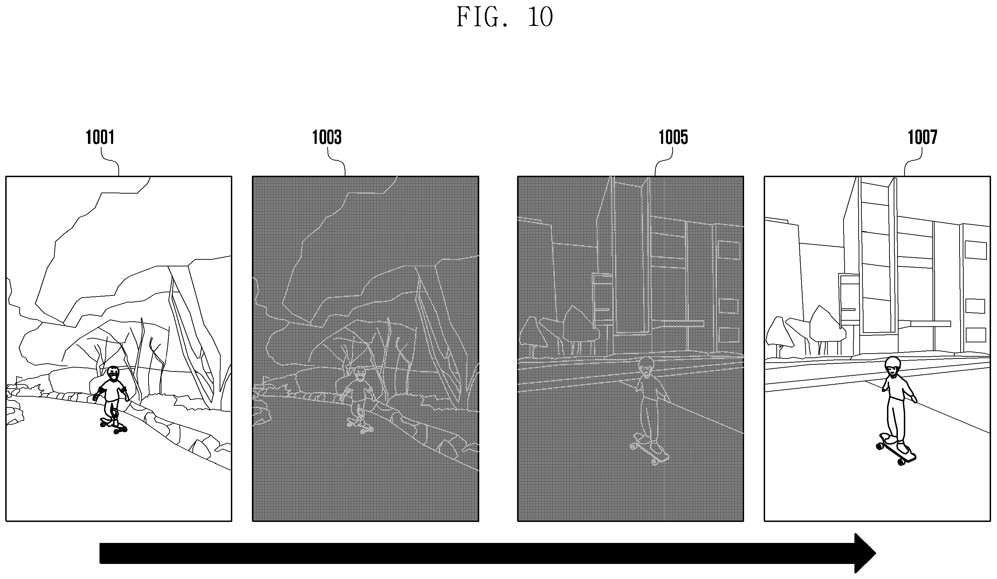

FIG. 10 is a diagram illustrating an operation of combining a main video and a sub-video in an electronic device 101 according to an embodiment of the disclosure.

In an embodiment, screen 1001 and screen 1003 may correspond to the main video (e.g., the video being displayed in FIG. 2 or the stored video in FIG. 3) and screen 1005 and screen 1007 may correspond to the sub-video recorded based on the recording information acquired from the main video.

In an embodiment, under control of the processor 120, the electronic device 101 may correct and combine the main video (e.g., the video being displayed in FIG. 2 or the stored video in FIG. 3) and the sub-video (or additional video). Here, in order to reduce the sense of incongruity in the combined video, under control of the processor 120, the electronic device 101 may fade out 1003 at least some frames of the main video (e.g., the video being displayed in FIG. 2 or the stored video in FIG. 3) and fade in 1005 at least some frames of the sub-video (or additional video).

In an embodiment, when the main video (e.g., the video being displayed in FIG. 2 or the stored video in FIG. 3) and the sub-video (or additional video) are corrected, under control of the processor 120, the electronic device 101 may correct at least some frames of the main video (e.g., the video being displayed in FIG. 2 or the stored video in FIG. 3) and at least some frames of the sub-video (or additional video) to have similar colors.

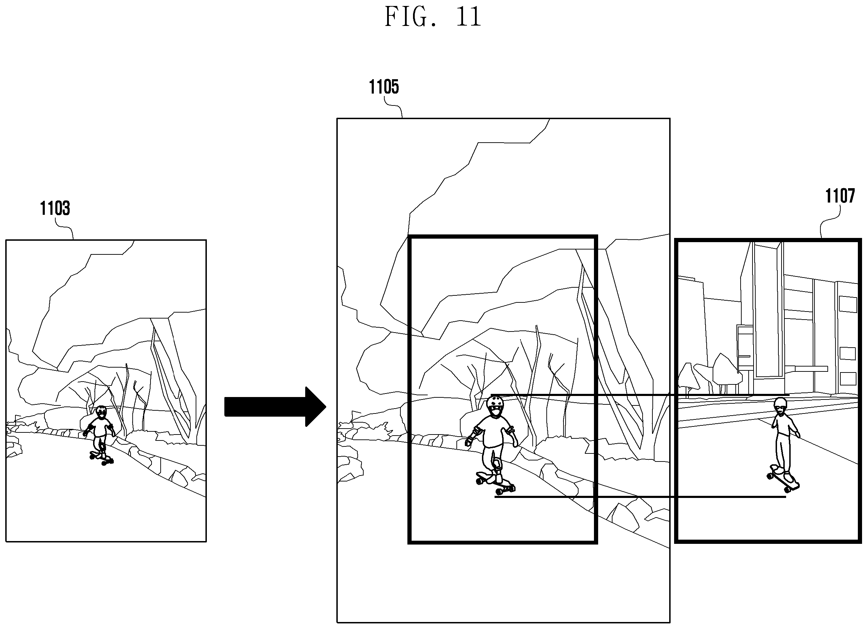

FIG. 11 is a diagram illustrating an operation of combining a main video and a sub-video in an electronic device 101 according to an embodiment of the disclosure.

In an embodiment, screen 1103 and screen 1105 may correspond to the main video (e.g., the video being displayed in FIG. 2 or the stored video in FIG. 3) and screen 1107 may correspond to the sub-video recorded based on the recording information acquired from the main video.

In an embodiment, under control of the processor 120, the electronic device 101 may correct and combine the main video (e.g., the video being displayed in FIG. 2 or the stored video in FIG. 3) and the sub-video (or additional video). Here, in order to reduce the sense of incongruity in the combined video, under control of the processor 120, the electronic device 101 may change and correct a size of an image such that an object included in the main video (e.g., the video being displayed in FIG. 2 or the stored video in FIG. 3) and an object included in the sub-video (or additional video) have an identical size.

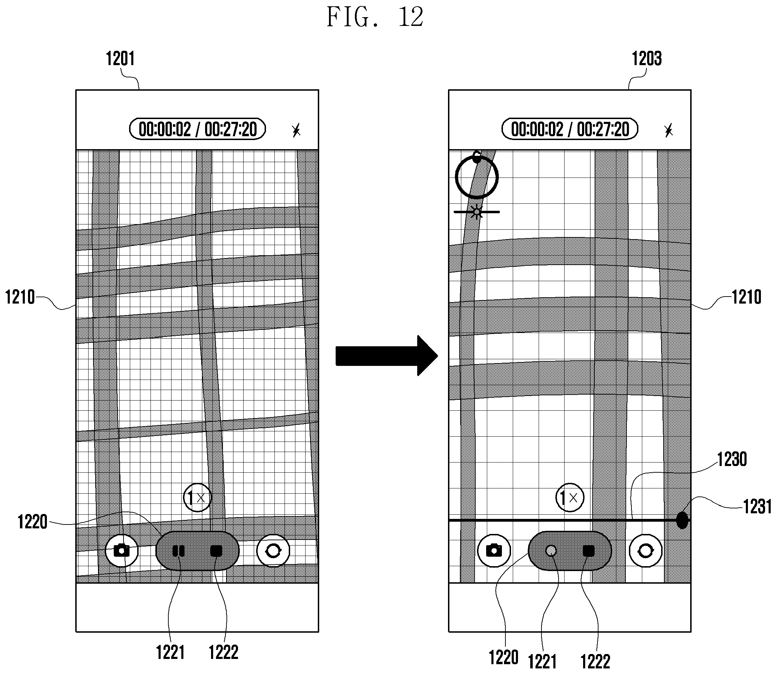

FIG. 12 is a diagram illustrating additional video recording according to an embodiment of the disclosure.

In an embodiment, under control of the processor 120, the electronic device 101 may execute the camera application and record an additional video (or sub-video) 1210 based on recording information.

Referring to screen 1201, when the additional video (or sub-video) 1210 is recorded, the electronic device 101 may display the video 1210 being recorded on a camera application execution screen and/or a recording control interface 1220 on the display 160.

In an embodiment, the recording control interface 1220 may include a user interface regarding pause recording 1221 or stop recording 1222. In case that a user input is received through the user interface regarding the pause recording 1221, the electronic device 101 may pause video recording and display a progress bar 1230 and a seeker 1231 on the user interface as shown in screen 1203. In case that the seeker 1231 is moved on the progress bar 1230 by the user input, the electronic device 101 may display a frame of the video corresponding to a location to which the seeker 1231 has been moved on the display 160. In case that the pause recording is released and recording starts in a state in which the seeker 1231 is moved, the electronic device 101 may record the additional video from a frame of the video corresponding to a location to which the seeker 1231 has been moved. The frame of the additional video (or sub-video) 1210 may be searched at the moved location and thus inconvenience of having to stop and resume recording may be eliminated and continuous recording may be possible.

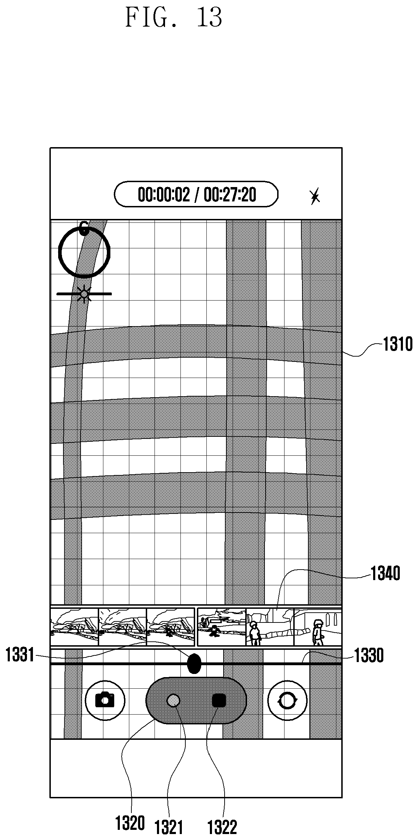

FIG. 13 is a diagram illustrating additional video recording according to an embodiment of the disclosure.

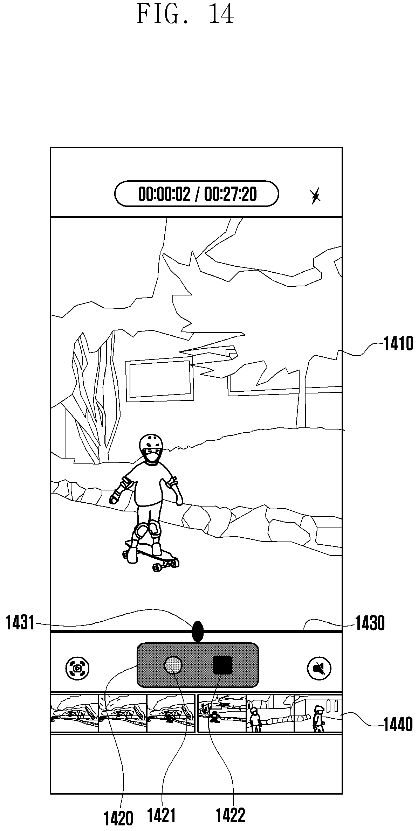

FIG. 14 is a diagram illustrating additional video recording according to an embodiment of the disclosure.

In an embodiment, under control of the processor 120, the electronic device 101 may execute the camera application and record an additional video (or sub-video) 1310 based on recording information.

When the additional video (or sub-video) 1310 is recorded, the electronic device 101 may display the video 1310 being recorded on a camera application execution screen and/or a recording control interface 1320 on the display 160.

In an embodiment, the recording control interface 1320 may include a user interface regarding pause recording 1321 or stop recording 1322. In case that a user input is received through the user interface regarding the pause recording 1321, the electronic device 101 may pause video recording and display the progress bar 1330, the seeker 1331, and the preview screen 1340 as the user interface. In case that the seeker 1331 is moved on the progress bar 1330 by the user input, a frame of the video corresponding to a location to which the seeker 1331 has been moved may be displayed on the preview screen 1340. Furthermore, in case that the seeker 1331 is moved on the progress bar 1330 by the user input, the electronic device 101 may display a frame of the video corresponding to a location to which the seeker 1331 has been moved on the display 160. In case that the pause recording is released and recording starts in a state in which the seeker 1331 is moved, the electronic device 101 may record the additional video from a frame of the video corresponding to a location to which the seeker 1331 has been moved.

Referring to FIG. 14, under control of the processor 120, the electronic device 101 may execute the camera application and display, as the user interface, the additional video (or sub-video) 1410, the recording control interface 1420, the progress bar 1430, the seeker 1431, and the preview screen 1440, based on the recording information. The preview screen 1440 in FIG. 14 may be bigger than the preview screen 1340 in FIG. 13 and remaining component and operations may be identical to those in FIG. 13.

In an embodiment, an electronic device 101 may include a camera 180, a display 160, a memory 130 configured to store instructions, and a processor 120, wherein the instructions, when executed by the processor 120, cause the electronic device 101 to display a video selected according to a user input on the display 160, display a user interface for continue video recording on at least a portion of a video play application, identify, based on an execution request for the continue video recording, recording information having been applied to a video being displayed, and perform a function for recording a sub-video based on the recording information, correct the sub-video and the selected video, connect an end point of the selected video and a start point of the sub-video to generate a video, and store the generated video in the memory.

In an embodiment, the instructions may cause recording information to be identified based on tag information and/or information on a storing path of the selected video file, and the recording information may include at least one of a camera configuration value applied when the selected video has been recorded, an effect applied to the selected video, or information on an application applied when the selected video has been recorded.

In an embodiment, the instructions may cause the recording information included in the selected video to be transferred to a camera application through an internal message.

In an embodiment, the instructions may cause a timing at which the sub-video starts in the selected video to be identified and, in case that a timing change is not required, the sub-video to be added to a certain time in the selected video.

In an embodiment, the certain time may be selected by a user or determined by similarity determination.

In an embodiment, the instructions may cause the certain time to be selected based on composition, object, time, or location information.

In an embodiment, the instructions may cause the sub-video and the selected video to be controlled so as to be combined by performing correction or applying a designated effect to a frame at which the sub-video and the selected video are combined.

In an embodiment, the instructions may cause the sub-video and the selected video to be controlled so as to be combined by performing correction to a frame at which the sub-video and the selected video are combined.

In an embodiment, the instructions may cause the recording information to be encoded and stored in the memory.

In an embodiment, the instructions may be configured to cause a preview screen acquired using the camera 180 to be displayed on the display 160, in case that a video similar to the preview screen is stored in the memory, a user interface for continue video recording to be displayed on the preview screen, recording information applied to the video being displayed to be identified based on an execution request for the continue video recording, and a video to be recorded following the selected video based on the recording information and to be stored in the memory.

In an embodiment, a method for recording a video according to an embodiment of the disclosure may include an operation of displaying a video selected according to a user input on a display 160, an operation of displaying a user interface for continue video recording on at least a portion of a video play application, an operation of identifying, based on an execution request for the continue video recording, recording information having been applied to a video being displayed, and an operation of performing a function for recording a sub-video based on the recording information, correcting the sub-video and the selected video, connecting an end point of the selected video and a start point of the sub-video to generate a video, and storing the generated video.

In an embodiment, the method for recording a video may further include an operation of identifying recording information based on tag information and/or information on a storing path of the selected video file.

In an embodiment, the recording information may include at least one of a camera configuration value applied when the selected video has been recorded, an effect applied to the selected video, or information on an application applied when the selected video has been recorded.

In an embodiment, the method for recording a video may include an operation of transferring the recording information included in the selected video to a camera application through an internal message.

In an embodiment, the method for recording a video may include an operation of identifying a timing at which the sub-video starts in the selected video, and in case that a timing change is not required, an operation of adding the sub-video to a certain time in the selected video.

In an embodiment, the method for recording a video may include an operation of selecting the certain time based on composition, object, time, or location information.

In an embodiment, the method for recording a video may include an operation of combining the sub-video and the selected video by performing correction or applying a designated effect to a frame at which the sub-video and the selected video are combined.

In an embodiment, the method for recording a video may include an operation of combining the sub-video and the selected video by performing correction to a frame at which the sub-video and the selected video are combined.

In an embodiment, the method for recording a video may include an operation of encoding and storing the recording information in the memory.

In an embodiment, the method for recording a video may include an operation of displaying a preview screen acquired using the camera 180 on the display 160, in case that a video similar to the preview screen is stored, an operation of displaying a user interface for continue video recording on the preview screen, an operation of identifying recording information applied to the video being displayed based on an execution request for the continue video recording, and an operation of recording a video following the selected video based on the recording information and storing same in the memory.

In an embodiment, a non-transitory computer-readable recording medium may store or record a program for executing the method for recording a video in FIGS. 2, 3, and 4.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., module or program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device (101) comprising:
a camera (180);
a display (160); and
a memory (130) configured to store instructions; and
a processor (120),
wherein the instructions, when executed by the processor, cause the electronic device (101) to:
display a video selected according to a user input on the display;
display a user interface for continue video recording on at least a portion of a video play application;
based on an execution request for the continue video recording, identify recording information having been applied to a video being displayed; and
perform a function for recording a sub-video based on the recording information, correct the sub-video and the selected video, connect an end point of the selected video and a start point of the sub-video to generate a video, and store the generated video in the memory.

2. The electronic device (101) of claim 1, wherein the instructions cause the recording information to be identified based on tag information and/or information on a storing path of a file of the selected video, wherein the instructions cause the recording information to be encoded and stored in the memory, and
wherein the recording information comprises at least one of a camera configuration value applied when the selected video has been recorded, an effect applied to the selected video, or information on an application applied when the selected video has been recorded.

3. The electronic device (101) of any of claims 1or 2, wherein the instructions cause the recording information included in the selected video to be transferred to a camera application through an internal message.

4. The electronic device (101) of any of claims 1 to 3, wherein the instructions cause:
a timing at which the sub-video starts in the selected video to be identified; and
in case that a timing change is not required, the sub-video to be added to a certain time in the selected video, wherein the certain time is selected by a user or determined by similarity determination.

5. The electronic device (101) of claim 4, wherein the instructions cause the certain time to be selected based on composition, object, time, or location information.

6. The electronic device (101) of any of claims 4 or 5, wherein the instructions cause the sub-video and the selected video to be controlled so as to be combined by performing correction to a frame at which the sub-video and the selected video are combined or applying a designated effect to a frame at which the sub-video and the selected video are combined.

7. The electronic device (101) of any of claims 1 to 6, wherein the instructions are configured to cause:
a preview screen acquired using the camera (180) to be displayed on the display (160);
in case that a video similar to the preview screen is stored in the memory (130), a user interface for the continue video recording to be displayed on the preview screen;
based on an execution request for the continue video recording, recording information applied to the video being displayed to be identified; and
a video to be recorded following the selected video based on the recording information and to be stored in the memory.

8. A method for recording a video, the method comprising:
displaying a video selected according to a user input on a display;
displaying a user interface for continue video recording on at least a portion of a video play application;
based on an execution request for the continue video recording, identifying recording information having been applied to a video being displayed; and
performing a function for recording a sub-video based on the recording information, correcting the sub-video and the selected video, connecting an end point of the selected video and a start point of the sub-video to generate a video, and storing the generated video in the memory.

9. The method of claim 8, further comprising identifying recording information based on tag information and/or information on a storing path of a file of the selected video,
encoding and storing the recording information in the memory.
wherein the recording information comprises at least one of a camera configuration value applied when the selected video has been recorded, an effect applied to the selected video, or information on an application applied when the selected video has been recorded.

10. The method of any of claims 8 or 9, comprising transferring the recording information included in the selected video to a camera application through an internal message.

11. The method of any of claims 8 to 10, comprising:
identifying a timing at which the sub-video starts in the selected video; and
in case that a timing change is not required, adding the sub-video to a certain time in the selected video, wherein the certain time is selected by a user or determined by similarity determination.

12. The method of any of claim 8 to 11, comprising selecting the certain time based on composition, object, time, or location information.

13. The method of any of claims 8 to 12, comprising combining the sub-video and the selected video by performing correction to a frame at which the sub-video and the selected video are combined or applying a designated effect to a frame at which the sub-video and the selected video are combined.

14. The method of any of claims 8 to 12, comprising:
displaying a preview screen acquired using the camera on the display;
in case that a video similar to the preview screen is stored in the memory, displaying a user interface for the continue video recording on the preview screen;
based on an execution request for the continue video recording, identifying recording information having been applied to a video being displayed; and
recording a video following the selected video based on the recording information and storing the recorded video in the memory.
